# EUROPEAN PATENT APPLICATION

(11) **EP 4 620 612 A1**
(43) Date of publication of application: **24.09.2025**
(21) Application number: 24883547.2
(22) Date of filing: 08.08.2024
(51) Int. Cl.: B23K 26/362, B23K 26/70

(54) **CODE ENGRAVING APPARATUS AND BATTERY PROCESSING DEVICE**

(30) Priority: 31.01.2024 CN 202420226994 U
(71) Applicant: Contemporary Amperex Technology Co., Limited, Jiaocheng District Ningde Fujian 352100 (CN)
(72) Inventor: CAI, Fuding, Ningde Fujian 352100 (CN); WU, Ying, Ningde Fujian 352100 (CN); LUO, Ji, Ningde Fujian 352100 (CN)
(74) Representative: Ran, Handong
(86) International application number: PCT/CN2024/110777
(87) International publication number: WO 2025/161332

(57) **Abstract**

The present application relates to an engraving apparatus and a battery processing device. The engraving apparatus includes: a base, a moving mechanism, and an engraving assembly. The base is provided with a carrying position configured to carry a battery to be engraved. The moving mechanism is movably disposed on the base. The engraving assembly is disposed on the moving mechanism and configured to perform an engraving operation on the battery. The engraving assembly includes a laser device and a dust extraction hood. A laser channel is formed inside the dust extraction hood. When the engraving assembly performs an engraving operation, the battery is in communication with the laser device via the laser channel. The dust extraction hood is formed with a dust extraction port in communication with the laser channel. The moving mechanism is configured to be capable of driving the engraving assembly to move in a first direction, a second direction, and a third direction, and the first direction, the second direction, and the third direction are arranged to intersect one another. **In** the present application, the engraving assembly is driven to move in three different directions by moving assemblies, such that the engraving assembly can perform a more accurate engraving operation on the battery, thereby improving the efficiency of the engraving process.

## Description

### CROSS-REFERENCE

The present application refers to Chinese Patent Application No. 2024202269948 entitled "ENGRAVING APPARATUS AND BATTERY PROCESSING DEVICE", filed on January 31, 2024, which is incorporated herein by reference in its entirety.

### TECHNICAL FIELD

The present application relates to the technical field of batteries, and in particular, to an engraving apparatus and a battery processing device.

### BACKGROUND

After a battery is manufactured, the surface of the battery needs to be engraved, so as to record the information of the battery. At present, the laser engraving method is commonly used to engrave the battery. However, due to the relatively high positioning precision required for the working area, the application of laser engraving in the industry is limited, or the production efficiency is relatively low when using laser engraving, which affects the overall battery production efficiency.

### SUMMARY

Based on this, it is necessary to provide an engraving apparatus and a battery processing device for solving the current problem of relatively low production efficiency when engraving the battery.

In a first aspect, the present application provides an engraving apparatus configured to engrave a battery. The engraving apparatus includes a base, a moving mechanism, and an engraving assembly. The base is provided with a carrying position configured to carry a battery to be engraved. The moving mechanism is movably disposed on the base. The engraving assembly is disposed on the moving mechanism and configured to perform an engraving operation on the battery. The engraving assembly includes a laser device and a dust extraction hood disposed on the laser device. A laser channel for a laser to pass through is formed inside the dust extraction hood. When the engraving assembly performs an engraving operation, the battery is in communication with the laser device via the laser channel. The dust extraction hood is formed with a dust extraction port in communication with the laser channel. The moving mechanism is configured to be capable of driving the engraving assembly to move in a first direction, a second direction, and a third direction, and the first direction, the second direction, and the third direction are arranged to intersect one another.

With the aforementioned structure, the carrying position can realize the support and the positioning of the battery, and the moving mechanism drives the engraving assembly to move relative to the battery in the first direction, the second direction, and the third direction, so as to realize the automatic positioning between the engraving assembly and the battery, such that the engraving assembly can perform a more accurate engraving operation on the battery, thereby improving the accuracy and the efficiency of the engraving process. With the arrangement of the dust extraction hood, fumes and dust in the laser channel can be extracted in time to maintain the cleanliness inside the laser channel and the stability of the laser energy, allowing for a better laser engraving effect.

In some embodiments, the moving mechanism includes a first moving assembly movably disposed on the base in the first direction. The first moving assembly is connected to the engraving assembly and configured to drive the engraving assembly to move in the first direction.

The moving mechanism includes a second moving assembly movably disposed on the first moving assembly in the second direction. The second moving assembly is connected to the engraving assembly and configured to drive the engraving assembly to move in the second direction.

The moving mechanism includes a third moving assembly movably disposed on the second moving assembly in the third direction. The third moving assembly is connected to the engraving assembly and configured to drive the engraving assembly to move in the third direction.

With the arrangement of the first moving assembly, the second moving assembly, and the third moving assembly, the engraving assembly may be driven to move in the first direction, the second direction, and the third direction, so as to adjust the positions of the engraving assembly in the first direction, the second direction, and the third direction, such that the engraving assembly can correspond to the position of the battery on the carrying position.

In some embodiments, the direction in which the laser device emits a laser is set in the third direction. The engraving apparatus further includes a range finder. The range finder is configured to measure the distance between the laser device and the battery on the carrying position in the third direction.

With the aforementioned structure, the distance between the laser device and the battery on the carrying position in the third direction can be adjusted more accurately, allowing for a better laser engraving effect of the laser device on the battery.

In some embodiments, the engraving apparatus further includes a conveying mechanism. The conveying mechanism extends in the first direction and is provided in the carrying position in a penetrating manner, so as to convey the battery to be engraved in the first direction.

With the arrangement of the conveying mechanism, a plurality of batteries can be driven simultaneously to move in the first direction and the batteries are continuously conveyed to the carrying position, such that the production efficiency of the engraving process can be improved.

In some embodiments, the conveying mechanism includes a jacking assembly. The jacking assembly is configured to jack the battery on the carrying position.

With the arrangement of the jacking assembly, the battery conveyance and the engraving operation on the battery on the carrying position may be performed simultaneously, thereby further improving the battery production efficiency.

In some embodiments, the jacking assembly includes a driving member and a jacking member. The jacking member is provided with an inclined surface and a supporting surface. The inclined surface is obliquely disposed in the vertical direction, and the supporting surface is horizontally disposed and connected to the top end of the inclined surface.

The driving member is configured to drive the battery to climb to the supporting surface from the inclined surface.

With the arrangement of the driving member and the jacking member, the battery can be moved to the supporting surface from a conveyor belt, such that the battery is detached from the conveyor belt and the battery laser engraving is performed without interfering with the continued conveyance of the conveyor belt. In addition, the jacking member cooperates with the driving member through the inclined surface and the supporting surface, so as to realize the jacking of the battery in the vertical direction, which can save the mounting space in the vertical direction, making the overall structure of the engraving apparatus more compact and more space-saving.

In some embodiments, the jacking assembly further includes a tray configured to carry the battery, a positioning member is disposed in a protruding manner on the surface of the tray on a side facing the battery, and the positioning member is configured to be inserted into a positioning hole on the battery to position the battery during the jacking of the battery.

As such, during the jacking of the battery carrier and the battery, the battery carrier and the battery can be stably supported on the tray through the insertion fit between the positioning member and the positioning hole, such that the battery is more stable during jacking.

In some embodiments, the positioning member is disposed on the tray in a way that the positioning member is retractable along its protruding direction. With the aforementioned structure, the positioning member may be more flexibly controlled to be inserted into or removed from the positioning hole, so as to facilitate the insertion fit and separation between the tray and the battery.

In some embodiments, the base includes a base body and a support body disposed on the base body. The moving mechanism is movably disposed on the support body.

As such, the support body is erected on the base body and the support body can cover the upper side of the carrying position. Then, the moving mechanism is movably disposed on the support body. When the moving mechanism moves on the support body, the distance between the engraving assembly and the battery on the carrying position can be adjusted.

In some embodiments, the support body includes a first beam body, a second beam body, and a third beam body connected to one another. The first beam body extends in the first direction, the second beam body extends in the second direction, and the third beam body extends in the third direction.

With the aforementioned structure, the moving mechanism may be flexibly disposed on any one of the first beam body, the second beam body, or the third beam body according to actual situations during use, so as to better adjust the moving position of the engraving assembly.

In some embodiments, the engraving apparatus further includes a control assembly. The control assembly is in communication connection with the moving mechanism and the engraving assembly, and is configured to control the on and off of the moving mechanism and the engraving assembly. With the arrangement of the control assembly, the automatic battery engraving process can be realized, thereby improving the work efficiency during engraving.

In a second aspect, the present application further provides a battery processing device. The battery processing device includes the engraving apparatus as described above. The engraving apparatus is configured to engrave the surface of a battery after the battery is assembled.

The aforementioned engraving apparatus and battery processing device, when engraving the battery, first position the battery on the carrying position and then drive the engraving assembly to move in three different directions (the first direction, the second direction, and the third direction) through moving assemblies, so as to adjust the position of the engraving assembly relative to the battery on the carrying position in a three-dimensional space, such that the engraving assembly can perform a more accurate engraving operation on the battery, thereby improving the accuracy and efficiency of the engraving process.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic three-dimensional structure diagram of an engraving apparatus according to one or more embodiments.
FIG. 2 is a side view of an engraving apparatus according to one or more embodiments.
FIG. 3 is a schematic structural diagram of a moving mechanism in an engraving apparatus according to one or more embodiments.
FIG. 4 is a schematic structural diagram of an engraving assembly in an engraving apparatus according to one or more embodiments.
FIG. 5 is a top view of an engraving apparatus according to one or more embodiments.
FIG. 6 is a schematic structural diagram of a jacking assembly in an engraving apparatus according to one or more embodiments.

Description of reference numerals: 100, engraving apparatus; 10, base; 20, moving mechanism; 30, engraving assembly; 40, conveying mechanism; 11, carrying position; 12, base body; 13, support body; 21, first moving assembly; 22, second moving assembly; 23, third moving assembly; 31, laser device; 32, dust extraction hood; 41, jacking assembly; 131, first beam body; 132, second beam body; 133, third beam body; 321, laser channel; 322, dust extraction port; 411, driving member; 412, jacking member; 413, inclined surface; 414, supporting surface; 415, tray; 416, positioning member; a, first direction; b, second direction; and c, third direction.

### DETAILED DESCRIPTION

To make the aforementioned objects, features, and advantages of the present application more clear and comprehensible, embodiments of the present application will be described in detail in conjunction with the drawings below. In the following description, numerous specific details are set forth in order to provide a thorough understanding of the present application. The present application may, however, be implemented in many different modes other than those described herein, and those skilled in the art can make similar improvements without departing from the content of the present application. Therefore, the present application is not limited to the embodiments disclosed hereinafter.

In the description of the present application, it should be understood that if there are the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, the directional or positional relationships indicated by the technical terms are based on the directional or positional relationships shown in the drawings. They are merely for the convenience of describing the present application and simplifying the description, and are not intended to indicate or imply that the apparatuses or elements referred to must have specific directions or must be constructed and operated in specific directions. Therefore, these terms should not be construed as limitations on the present application.

In addition, if there are the terms "first" and "second", the terms are used for descriptive purposes only and are not to be construed as indicating or implying relative importance or to implicitly indicate the number of technical features indicated. As such, a feature defined by "first" or "second" may explicitly or implicitly show that at least one such feature is included. In the description of the present application, if there is the term "plurality", unless otherwise explicitly specified, the "plurality" refers to at least two, e.g., two, three, etc.

In the present application, unless otherwise specifically stated or limited, if there are the terms "mount", "link", "connect", "fix", and the like, the terms should be construed broadly. For example, unless otherwise explicitly limited, they may be a fixed connection, a detachable connection, or an integral connection; a mechanical connection or an electrical connection; or a direct connection, an indirect connection through an intermediate, internal communication between two elements, or interaction between two elements. For those of ordinary skill in the art, the specific meanings of the aforementioned terms in the present application can be understood according to specific conditions.

In the present application, unless otherwise explicitly stated or limited, if there is a description that a first feature is "above" or "below" a second feature and other similar descriptions, the meanings thereof may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or simply mean that the first feature is at a higher horizontal level than the second feature. A first feature being "under", "below", and "at the bottom of" a second feature may be that the first feature is right under or obliquely under the second feature, or may simply mean that the first feature is at a lower horizontal level than the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "vertical", "horizontal", "upper", "lower", "left", "right", and similar descriptions, if present, are used in the present application for descriptive purposes only and do not necessarily represent the only implementation.

At present, judging from the development of the market situation, the application of power batteries is becoming broader. Power batteries are not only applied in energy storage power systems such as hydropower, thermal power, wind power, and solar power stations, but are also widely applied in electric transportation vehicles such as electric bicycles, electric motorcycles, and electric cars, and other fields. As the application of the power batteries becomes broader, the market demand thereof is also increasing.

A battery cell is the smallest unit forming a battery. After one or a plurality of battery cells are assembled to form a battery, various pieces of information such as the model and the production date of each battery need to be displayed on the outer surface of the battery, such that the battery can be quickly identified and distinguished during subsequent transportation or use.

At present, the laser engraving method is commonly used to engrave information on the outer surface of the battery. However, due to the relatively high positioning precision required for the working area in laser engraving, the current application of laser engraving in the industry is still significantly limited. Therefore, at present, the efficiency of the production process is generally relatively low when using laser engraving, resulting in a relatively low overall production efficiency of batteries.

Based on the above consideration, in order to solve the current problem of relatively low production efficiency when engraving the battery, one or more embodiments of the present application provide an engraving apparatus. According to the engraving apparatus, when engraving the battery, the battery is first positioned on a carrying position and then an engraving assembly is driven to move in three different directions (a first direction, a second direction, and a third direction) through moving assemblies, so as to adjust the position of the engraving assembly relative to the battery on the carrying position in a three-dimensional space, such that the engraving assembly can perform a more accurate engraving operation on the battery, thereby improving the accuracy and efficiency of the engraving process.

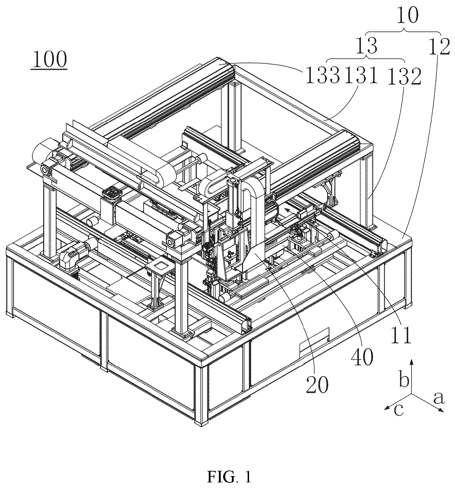

Referring to FIGs. 1, 2, and 3, an embodiment of the present application provides an engraving apparatus 100 configured to engrave a battery. The engraving apparatus 100 includes a base 10, a moving mechanism 20, and an engraving assembly 30. The base 10 is provided with a carrying position 11 configured to carry a battery to be engraved. The moving mechanism 20 is movably disposed on the base 10. The engraving assembly 30 is disposed on the moving mechanism 20 and configured to perform an engraving operation on the battery. The moving mechanism 20 is configured to be capable of driving the engraving assembly 30 to move in a first direction a, a second direction b, and a third direction c, and the first direction a, the second direction b, and the third direction c are arranged to intersect one another.

It should be noted that the battery may be an integral structure formed by connecting one or more battery cells in series, in parallel, or in series-parallel, or may be an integral structure formed by combining a plurality of battery module groups, where each of the battery module groups is formed by connecting one or more battery cells in series, in parallel, or in series-parallel.

The carrying position 11 on the base 10 can support and position the battery to be engraved. Specifically, the position of the carrying position 11 is fixed, and then the battery to be engraved is placed on the carrying position 11, such that the positioning of the battery can be realized.

The engraving assembly 30 refers to a component capable of engraving the battery. The moving mechanism 20 refers to a structure capable of driving the engraving assembly 30 to move relative to the battery. The engraving assembly 30 is disposed on the moving mechanism 20. During the movement relative to the base 10, the moving mechanism 20 can drive the engraving assembly 30 to move synchronously, so as to change the position of the engraving assembly 30 relative to the battery, such that the engraving assembly 30 can be aligned with the position on the battery where engraving is required and perform an accurate engraving operation.

Specifically, the first direction a, the second direction b, and the third direction c are arranged perpendicular to one another. The first direction a may be set as a first horizontal direction, the second direction b may be set as a vertical direction, and the third direction c may be set as a second horizontal direction perpendicular to the first horizontal direction.

During the engraving of the battery, the battery is first placed on the carrying position 11. Then, the moving mechanism 20 is controlled to drive the engraving assembly 30 to move sequentially in the first direction a, the second direction b, and the third direction c, so as to adjust the position of the engraving assembly 30 relative to the battery on the carrying position 11, such that the engraving assembly 30 is aligned with the area to be engraved of the battery and is at the optimal engraving distance from the battery. In this case, the engraving assembly 30 is controlled to perform an engraving operation on the battery on the carrying position 11.

With the aforementioned structure, the carrying position 11 can realize the support and the positioning of the battery, and the moving mechanism 20 drives the engraving assembly 30 to move relative to the battery in the first direction a, the second direction b, and the third direction c, so as to realize the automatic positioning between the engraving assembly 30 and the battery, such that the engraving assembly 30 can perform a more accurate engraving operation on the battery, thereby improving the efficiency of the engraving process.

In some embodiments, the moving mechanism 20 includes a first moving assembly 21 movably disposed on the base 10 in the first direction a. The first moving assembly 21 is connected to the engraving assembly 30 and configured to drive the engraving assembly 30 to move in the first direction a.

Specifically, the first direction a may be set as the first horizontal direction. The engraving assembly 30 is disposed on the first moving assembly 21. The engraving assembly 30 is driven to move in the first horizontal direction by the first moving assembly 21, so as to adjust the position of the engraving assembly 30 relative to the battery on the carrying position 11 in the first horizontal direction, such that the engraving assembly 30 can correspond to the position of the battery on the carrying position 11 in the first horizontal direction.

Further, the first moving assembly 21 may include a first body and a first driving cylinder. The first body is movably disposed on the base 10, the engraving assembly 30 is disposed on the first body, and the first body and the engraving assembly 30 thereon are driven to move in the first horizontal direction by the first driving cylinder, so as to adjust the position of the engraving assembly 30 in the first horizontal direction.

It can be understood that the first moving assembly 21 may also be configured as other moving mechanisms, for example, as a lead screw assembly. The engraving assembly 30 is disposed on the lead screw assembly, and the engraving assembly 30 is driven to move in the first direction a by the lead screw assembly. The first moving assembly 21 may also be configured as other moving mechanisms such as a slide block and a slide rail, which will not be described in detail herein.

With the arrangement of the first moving assembly 21, the engraving assembly 30 may be driven to move in the first direction a, so as to adjust the position of the engraving assembly 30 in the first direction a, such that the engraving assembly 30 can correspond to the position of the battery on the carrying position 11 in the first direction a.

In some embodiments, the moving mechanism 20 further includes a second moving assembly 22 movably disposed on the first moving assembly 21 in the second direction b. The second moving assembly 22 is connected to the engraving assembly 30 and configured to drive the engraving assembly 30 to move in the second direction b.

Specifically, the second direction b may be set as the vertical direction. The engraving assembly 30 is disposed on the second moving assembly 22 and indirectly disposed on the first moving assembly 21 through the second moving assembly 22. The engraving assembly 30 is driven to move in the vertical direction by the second moving assembly 22, so as to adjust the position of the engraving assembly 30 relative to the battery on the carrying position 11 in the vertical direction, such that the engraving assembly 30 can correspond to the position of the battery on the carrying position 11 in the vertical direction.

After the battery is placed on the carrying position 11, the first moving assembly 21 is first controlled to move in the first horizontal direction, so as to drive the engraving assembly 30 to move in the first horizontal direction. When the position of the engraving assembly 30 in the first horizontal direction corresponds to the position of the battery on the carrying position 11, the first moving assembly 21 is controlled to stop moving.

Then, the second moving assembly 22 is controlled to move relative to the first moving assembly 21 in the vertical direction, so as to drive the engraving assembly 30 to move in the vertical direction, such that the engraving assembly 30 can be positioned at the same height as the battery on the carrying position 11 in the vertical direction.

Further, the second moving assembly 22 may include a second body and a second driving cylinder. The second body is movably disposed on the first body of the first moving assembly 21, the engraving assembly 30 is disposed on the second body, and the second body and the engraving assembly 30 thereon are driven to move in the vertical direction by the second driving cylinder, so as to adjust the position of the engraving assembly 30 in the vertical direction.

It can be understood that the second moving assembly 22 may also be configured as other moving mechanisms, for example, as a lead screw assembly. The engraving assembly 30 is disposed on the lead screw assembly, and the engraving assembly 30 is driven to move in the second direction b by the lead screw assembly. The second moving assembly 22 may also be configured as other moving mechanisms such as a slide block and a slide rail, which will not be described in detail herein.

With the arrangement of the second moving assembly 22, the engraving assembly 30 may be driven to move in the second direction b, so as to adjust the position of the engraving assembly 30 in the second direction b, such that the engraving assembly 30 can correspond to the position of the battery on the carrying position 11 in the second direction b.

In some embodiments, the moving mechanism 20 further includes a third moving assembly 23 movably disposed on the second moving assembly 22 in the third direction c. The third moving assembly 23 is connected to the engraving assembly 30 and configured to drive the engraving assembly 30 to move in the third direction c.

Specifically, the third direction c may be set as the second horizontal direction and perpendicular to the first horizontal direction. The engraving assembly 30 is disposed on the third moving assembly 23 and indirectly disposed on the second moving assembly 22 through the third moving assembly 23. The engraving assembly 30 is driven to move in the second horizontal direction by the third moving assembly 23, so as to adjust the position of the engraving assembly 30 relative to the battery on the carrying position 11 in the second horizontal direction, such that the engraving assembly 30 can correspond to the position of the battery on the carrying position 11 in the second horizontal direction.

After the battery is placed on the carrying position 11, the first moving assembly 21 is first controlled to move in the first horizontal direction, so as to drive the engraving assembly 30 to move in the first horizontal direction. When the position of the engraving assembly 30 in the first horizontal direction corresponds to the position of the battery on the carrying position 11, the first moving assembly 21 is controlled to stop moving.

Then, the second moving assembly 22 is controlled to move relative to the first moving assembly 21 in the vertical direction, so as to drive the engraving assembly 30 to move in the vertical direction. When the engraving assembly 30 is positioned at the same height as the battery on the carrying position 11 in the vertical direction, the second moving assembly 22 is controlled to stop moving.

Further, the third moving assembly 23 is controlled to move relative to the second moving assembly 22 in the second horizontal direction, so as to drive the engraving assembly 30 to move in the second horizontal direction. As such, the engraving assembly 30 is finally aligned with the position of the battery on the carrying position 11 by moving in three directions perpendicular to one another in a three-dimensional space. In this case, the engraving assembly 30 is started, so as to perform an accurate engraving operation on the battery on the carrying position 11.

The third moving assembly 23 may include a third body and a third driving cylinder. The third body is movably disposed on the second body of the second moving assembly 22, the engraving assembly 30 is disposed on the third body, and the third body and the engraving assembly 30 thereon are driven to move in the second horizontal direction by the third driving cylinder, so as to adjust the position of the engraving assembly 30 in the second horizontal direction.

It can be understood that the third moving assembly 23 may also be configured as other moving mechanisms, for example, as a lead screw assembly. The engraving assembly 30 is disposed on the lead screw assembly, and the engraving assembly 30 is driven to move in the third direction c by the lead screw assembly. The third moving assembly 23 may also be configured as other moving mechanisms such as a slide block and a slide rail, which will not be described in detail herein.

With the arrangement of the third moving assembly 23, the engraving assembly 30 may be driven to move in the third direction c, so as to adjust the position of the engraving assembly 30 in the third direction c, such that the engraving assembly 30 can correspond to the position of the battery on the carrying position 11 in the third direction c and the purpose of aligning the engraving assembly 30 with the battery on the carrying position 11 is finally achieved, so as to perform an engraving operation on the battery.

In some embodiments, the engraving assembly 30 includes a laser device 31. The direction in which the laser device 31 emits a laser is set in the third direction c. The engraving apparatus 100 further includes a range finder (not shown in the drawings). The range finder is configured to measure the distance between the laser device 31 and the battery on the carrying position 11 in the third direction c.

Specifically, the laser device 31 refers to a component capable of emitting a laser and performing laser engraving on the battery through the laser. The laser device 31 is disposed on the third body of the third moving assembly 23 and the direction in which the laser device 31 emits a laser is set in the third direction c.

The range finder refers to a component capable of measuring the distance between the laser device 31 and the battery on the carrying position 11 in the third direction c. The range finder is mounted on the third body and the distance between the laser device 31 and the battery on the carrying position 11 in the third direction c is measured by the range finder. A target distance (i.e., a distance that allows for a better laser engraving effect) may be preset in advance. If the actually measured distance is greater than the target distance, the third moving assembly 23 is controlled to drive the engraving assembly 30 to move towards the direction close to the battery. If the actually measured distance is less than the target distance, the third moving assembly 23 is controlled to drive the engraving assembly 30 to move towards the direction away from the battery. As such, the distance between the engraving assembly 30 and the battery in the third direction c is enabled to satisfy the target distance.

With the aforementioned structure, the distance between the laser device 31 and the battery on the carrying position 11 in the third direction c can be adjusted more accurately, allowing for a better laser engraving effect of the laser device 31 on the battery.

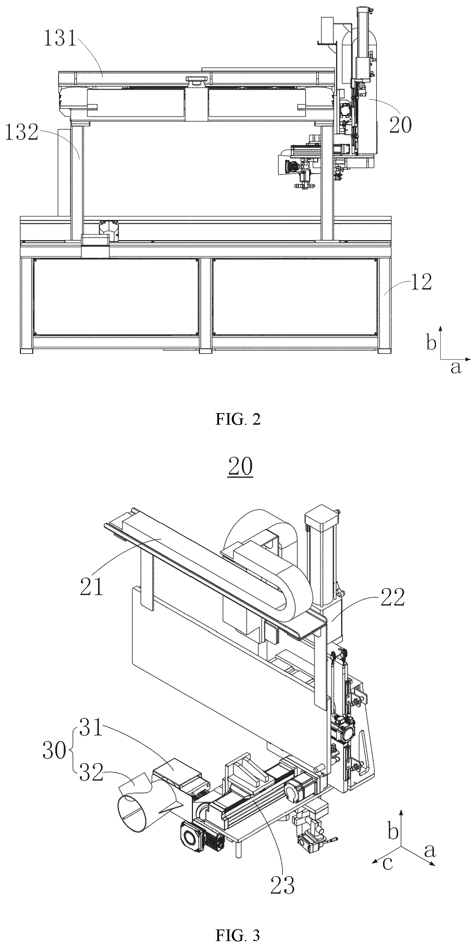

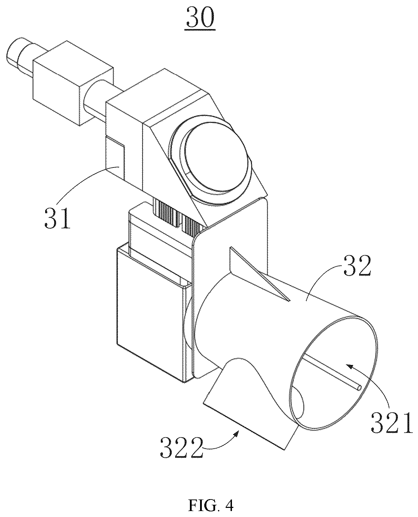

As shown in FIG. 3 and FIG. 4, in some embodiments, the engraving assembly 30 further includes a dust extraction hood 32 disposed on the laser device 31. A laser channel 321 for a laser to pass through is formed inside the dust extraction hood 32. When the engraving assembly 30 performs an engraving operation, the battery is in communication with the laser device 31 via the laser channel 321. The dust extraction hood 32 is formed with a dust extraction port 322 in communication with the laser channel 321. The dust extraction port 322 is configured to extract fumes and dust in the laser channel 321.

It should be noted that, during laser engraving, a large amount of fumes and dust is generated. These fumes and dust gradually accumulate, partially obstructing the laser emission path of the laser device 31, such that the laser energy is weakened, thereby affecting the laser engraving effects.

Based on this, one dust extraction hood 32 is disposed on the laser device 31 and the dust extraction hood 32 encloses the laser emission path for a laser to emit from the laser device 31. When the engraving assembly 30 performs an engraving operation, the dust extraction hood 32 is positioned between the laser device 31 and the surface to be engraved of the battery, and the dust extraction hood 32 and the surface to be engraved of the battery are in contact with each other.

In this case, the laser channel 321 is formed inside the dust extraction hood 32. Both ends of the laser channel 321 are in communication with the laser device 31 and the surface to be engraved of the battery, respectively. The laser device 31 is started, and a laser is emitted along the laser channel 321 to reach the surface to be engraved of the battery, so as to perform the engraving operation.

At the same time, fumes and dust are formed in the laser channel 321. The dust extraction port 322 on the dust extraction hood 32 is connected to a dust extractor. The dust extractor is started to collect the fumes and dust in the laser channel 321, such that the fumes and dust can be extracted from the laser channel 321 in time to maintain the cleanliness inside the laser channel 321.

With the arrangement of the dust extraction hood 32, the fumes and dust in the laser channel 321 can be extracted in time to maintain the cleanliness inside the laser channel 321 and the stability of the laser energy, allowing for a better laser engraving effect.

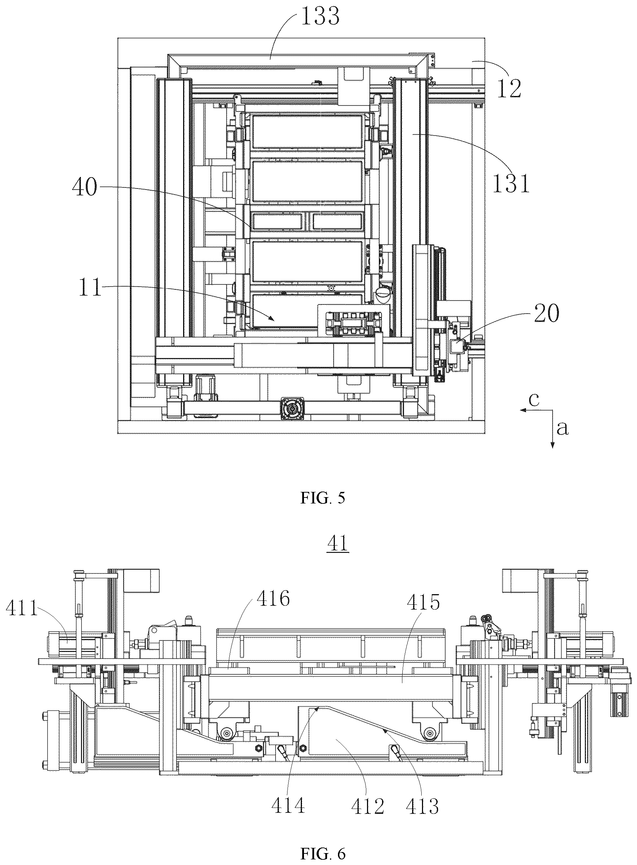

Referring to FIG. 1 and FIG. 5, in some embodiments, the engraving apparatus 100 further includes a conveying mechanism 40. The conveying mechanism 40 extends in the first direction a and is provided in the carrying position 11 in a penetrating manner, so as to convey the battery to be engraved in the first direction a.

Specifically, the conveying mechanism 40 may include a conveyor belt, and the conveyor belt extends in the first direction a and is provided in the carrying position 11 in a penetrating manner. A plurality of batteries are spaced apart on the conveyor belt in the first direction a and the batteries are driven to move in the first direction a by the conveyor belt.

With the arrangement of the conveying mechanism 40, a plurality of batteries can be driven simultaneously to move in the first direction a and the batteries are continuously conveyed to the carrying position 11, such that the production efficiency of the engraving process can be improved.

As shown in FIG. 1 and FIG. 6, in some embodiments, the conveying mechanism 40 includes a jacking assembly 41. The jacking assembly 41 is configured to jack the battery on the carrying position 11.

Specifically, the jacking assembly 41 may be disposed on the base 10. When one of the batteries on the conveyor belt moves to the position of the carrying position 11, the jacking assembly 41 jacks the battery upwards from the conveyor belt by a certain height, such that the battery can be detached from the conveyor belt and the laser engraving is performed on the carrying position 11.

In this case, the conveyor belt does not need to be stopped and may continue to convey other batteries.

With the arrangement of the jacking assembly 41, the battery conveyance and the engraving operation on the battery on the carrying position 11 may be performed simultaneously, thereby further improving the battery production efficiency.

In some embodiments, the jacking assembly 41 includes a driving member 411 and a jacking member 412. The jacking member 412 is provided with an inclined surface 413 and a supporting surface 414. The inclined surface 413 is obliquely disposed in the vertical direction, and the supporting surface 414 is horizontally disposed and connected to the top end of the inclined surface 413. The driving member 411 is configured to drive the battery to climb to the supporting surface 414 from the inclined surface 413.

Specifically, the driving member 411 may be configured as a driving cylinder and is movably disposed in the third direction c, i.e., the second horizontal direction. As such, the driving member 411 may push the battery on the conveyor belt onto the jacking member 412 in the second horizontal direction.

Further, the driving member 411 pushes the battery on the conveyor belt onto the inclined surface 413 in the second horizontal direction and then continues to push the battery along the inclined surface 413, such that the battery may move upward along the inclined surface 413 until the battery moves onto the horizontally disposed supporting surface 414 and is fixed on the supporting surface 414.

As such, when the battery on the conveyor belt moves to the position corresponding to the carrying position 11, the driving member 411 pushes the battery on the conveyor belt onto the inclined surface 413 in the second horizontal direction and pushes the battery to climb to the supporting surface 414 along the inclined surface 413. Then, the moving mechanism 20 drives the engraving assembly 30 to move sequentially in the first direction a, the second direction b, and the third direction c, such that the laser device 31 is aligned with the battery and the laser engraving operation is performed.

With the arrangement of the driving member 411 and the jacking member 412, the battery can be moved to the supporting surface 414 from the conveyor belt, such that the battery is detached from the conveyor belt and the battery laser engraving is performed without interfering with the continued conveyance of the conveyor belt. In addition, the jacking member 412 cooperates with the driving member 411 through the inclined surface 413 and the supporting surface 414, so as to realize the jacking of the battery in the vertical direction, which can save the mounting space in the vertical direction, making the overall structure of the engraving apparatus 100 more compact and more space-saving.

In some embodiments, the jacking assembly 41 further includes a tray 415 configured to carry the battery, a positioning member 416 is disposed in a protruding manner on the surface of the tray 415 on a side facing the battery, and the positioning member 416 is configured to be inserted into a positioning hole on the battery to position the battery during the jacking of the battery.

It should be noted that, in order to make the conveyance and moving process of the battery more stable, the battery is generally placed on a battery carrier, and the battery and the battery carrier move simultaneously as a whole.

Specifically, the battery is placed on the battery carrier, and the battery carrier and the battery are then placed together on the tray 415. The positioning member 416 is disposed in a protruding manner on the top surface of the tray 415. The positioning member 416 may, but is not limited to, be configured as a pin. The bottom surface of the battery carrier is formed with a positioning hole fitted to the pin.

Before the driving member 411 drives the battery and the battery carrier to be jacked, the pin on the tray 415 is first inserted into the positioning hole on the battery carrier, such that the tray 415 is in insertion fit to the battery carrier, allowing for a stable connection between the two. Then, the driving member 411 is controlled to push the tray 415, the battery carrier and the battery thereon together to climb to the supporting surface 414 along the inclined surface 413, and the tray, the battery carrier and the battery are finally fixed on the supporting surface 414.

As such, during the jacking of the battery carrier and the battery, the battery carrier and the battery can be stably supported on the tray 415 through the insertion fit between the positioning member 416 and the positioning hole, such that the battery is more stable during jacking.

In some embodiments, the positioning member 416 is disposed on the tray 415 in a way that the positioning member is retractable along its protruding direction.

Specifically, the pin is retractably disposed on the tray 415 in the vertical direction. Before the insertion fit, the pin is in a retracted state. Before starting to jack the battery, the pin extends upward, such that the pin is successfully inserted into the positioning hole on the bottom surface of the battery carrier, thereby completing the insertion fit between the two.

With the aforementioned structure, the positioning member 416 may be more flexibly controlled to be inserted into or removed from the positioning hole, so as to facilitate the insertion fit and separation between the tray 415 and the battery.

Referring to FIG. 1 again, in some embodiments, the base 10 includes a base body 12 and a support body 13 disposed on the base body 12. The moving mechanism 20 is movably disposed on the support body 13.

Specifically, the base body 12 can serve as a support and a mounting base. The support body 13 is erected on the base body 12 and the support body 13 can cover the upper side of the carrying position 11. Then, the moving mechanism 20 is movably disposed on the support body 13. When the moving mechanism 20 moves on the support body 13, the distance between the engraving assembly 30 and the battery on the carrying position 11 can be adjusted.

In some embodiments, the support body 13 includes a first beam body 131, a second beam body 132, and a third beam body 133 connected to one another. The first beam body 131 extends in the first direction a, the second beam body 132 extends in the second direction b, and the third beam body 133 extends in the third direction c.

Specifically, the first beam body 131, the second beam body 132, and the third beam body 133 are arranged perpendicular to one another and together enclose to form a rectangular frame, so as to cover the upper side of the carrying position 11.

With the aforementioned structure, the moving mechanism 20 may be flexibly disposed on any one of the first beam body 131, the second beam body 132, or the third beam body 133 according to actual situations during use, so as to better adjust the moving position of the engraving assembly 30.

In some embodiments, the engraving apparatus 100 further includes a control assembly (not shown in the drawings). The control assembly is in communication connection with the moving mechanism 20 and the engraving assembly 30, and is configured to control the on and off of the moving mechanism 20 and the engraving assembly 30.

Specifically, the control assembly may be configured as a controller. The controller is in communication connection with the first moving assembly 21, the second moving assembly 22, the third moving assembly 23, and the laser device 31. In addition, the controller may be in communication connection with the range finder and the jacking assembly 41.

The controller first controls the jacking assembly 41 to jack the battery on the conveyor belt, so as to separate the battery from the conveyor belt. Then, the controller controls the first moving assembly 21 to drive the engraving assembly 30 to move in the first direction a, controls the second moving assembly 22 to drive the engraving assembly 30 to move in the second direction b, and controls the third moving assembly 23 to drive the engraving assembly 30 to move in the third direction c.

Further, the controller controls the range finder to be started, and the range finder measures the distance between the laser device 31 and the battery, and feeds the measurement result back to the controller. The controller controls the third moving assembly 23 to move a corresponding distance according to the measurement result, so as to adjust the distance between the laser device 31 and the battery.

Then, the controller controls the laser device 31 to be started, so as to perform an engraving operation on the battery.

With the arrangement of the control assembly, the automatic battery engraving process can be realized, thereby improving the work efficiency during engraving.

Based on the same concept as the aforementioned engraving apparatus 100, the present application further provides a battery processing device. The battery processing device includes the engraving apparatus 100 as described above.

According to one or more embodiments, a plurality of batteries are first conveyed sequentially in the first direction a by the conveyor belt. When one of the batteries moves to the position corresponding to the carrying position 11, the positioning member 416 is first controlled to protrude upward and be inserted into the positioning hole on the bottom surface of the battery carrier, allowing for a stable connection between the battery carrier and the tray 415.

Then, the driving member 411 is controlled to push the battery on the conveyor belt onto the inclined surface 413, and the battery gradually climbs to the supporting surface 414 along the inclined surface 413 and is finally fixed on the supporting surface 414.

Further, the controller controls the first moving assembly 21 to drive the engraving assembly 30 to move in the first horizontal direction. When the position of the engraving assembly 30 in the first horizontal direction corresponds to the battery on the carrying position 11, the controller controls the second moving assembly 22 to drive the engraving assembly 30 to move in the vertical direction, such that the engraving assembly 30 is positioned at the same height as the battery on the carrying position 11.

In this case, the controller then controls the third moving assembly 23 to drive the engraving assembly 30 to move in the second horizontal direction, that is, the third moving assembly 23 drives the engraving assembly 30 to move close to or away from the battery on the carrying position 11. At the same time, the controller controls the range finder to be started, and the range finder measures the distance between the laser device 31 and the battery on the carrying position 11 in the second horizontal direction. When the measurement result meets the requirement of the target distance, the controller controls the third moving assembly 23 to stop moving. The laser device 31 is started to perform laser engraving on the battery.

While performing laser engraving, the dust extractor connected to the dust extraction port 322 is turned on and the dust extractor extracts the fumes and dust in the laser channel 321 through the dust extraction port 322, so as to maintain the cleanliness inside the laser channel 321, allowing for a better laser engraving effect.

The various technical features in the foregoing embodiments may be randomly combined. For a concise description, not all possible combinations of the various technical features in the aforementioned embodiments are described. However, provided that combinations of these technical features do not conflict with each other, the combinations of the various technical features are considered as falling within the scope of this specification.

The foregoing embodiments merely illustrate several implementations of the present application and the description thereof is specific and detailed, however, this cannot be construed as limiting the scope of the present application. It should be noted that various changes and modifications can be made by those of ordinary skill in the art without departing from the concept of the present application, and these changes and modifications are all within the protection scope of the present application. Therefore, the protection scope of the present application shall be subject to the appended claims.

## Claims

1. An engraving apparatus, configured to engrave a battery, the engraving apparatus comprising:
a base, provided with a carrying position configured to carry a battery to be engraved;
a moving mechanism, movably disposed on the base; and
an engraving assembly, disposed on the moving mechanism and configured to perform an engraving operation on the battery, wherein the engraving assembly comprises a laser device and a dust extraction hood disposed on the laser device, wherein a laser channel for a laser to pass through is formed inside the dust extraction hood, and when the engraving assembly performs an engraving operation, the battery is in communication with the laser device via the laser channel; the dust extraction hood is formed with a dust extraction port in communication with the laser channel,
wherein the moving mechanism is configured to be capable of driving the engraving assembly to move in a first direction, a second direction, and a third direction, and the first direction, the second direction, and the third direction are arranged to intersect one another.

2. The engraving apparatus according to claim 1, wherein the moving mechanism comprises a first moving assembly movably disposed on the base in the first direction, wherein the first moving assembly is connected to the engraving assembly and configured to drive the engraving assembly to move in the first direction;
the moving mechanism comprises a second moving assembly movably disposed on the first moving assembly in the second direction, wherein the second moving assembly is connected to the engraving assembly and configured to drive the engraving assembly to move in the second direction;
the moving mechanism comprises a third moving assembly movably disposed on the second moving assembly in the third direction, wherein the third moving assembly is connected to the engraving assembly and configured to drive the engraving assembly to move in the third direction.

3. The engraving apparatus according to claim 1 or 2, wherein a direction in which the laser device emits a laser is set in the third direction and the engraving apparatus further comprises a range finder, wherein the range finder is configured to measure a distance between the laser device and the battery on the carrying position in the third direction.

4. The engraving apparatus according to any one of claims 1 to 3, wherein the engraving apparatus further comprises a conveying mechanism, wherein the conveying mechanism extends in the first direction and is provided in the carrying position in a penetrating manner, so as to convey the battery to be engraved in the first direction.

5. The engraving apparatus according to claim 4, wherein the conveying mechanism comprises a jacking assembly, wherein the jacking assembly is configured to jack the battery on the carrying position.

6. The engraving apparatus according to claim 5, wherein the jacking assembly comprises a driving member and a jacking member, wherein the jacking member is provided with an inclined surface and a supporting surface, the inclined surface is obliquely disposed in the vertical direction, and the supporting surface is horizontally disposed and connected to a top end of the inclined surface,
wherein the driving member is configured to drive the battery to climb to the supporting surface from the inclined surface.

7. The engraving apparatus according to claim 6, wherein the jacking assembly further comprises a tray configured to carry the battery, wherein a positioning member is disposed in a protruding manner on a surface of the tray on a side facing the battery, and the positioning member is configured to be inserted into a positioning hole on the battery to position the battery during jacking of the battery.

8. The engraving apparatus according to claim 7, wherein the positioning member is disposed on the tray and retractable along its protruding direction .

9. The engraving apparatus according to any one of claims 1 to 8, wherein the base comprises a base body and a support body disposed on the base body, wherein the moving mechanism is movably disposed on the support body.

10. The engraving apparatus according to claim 9, wherein the support body comprises a first beam body, a second beam body, and a third beam body connected to one another, wherein the first beam body extends in the first direction, the second beam body extends in the second direction, and the third beam body extends in the third direction.

11. The engraving apparatus according to any one of claims 1 to 10, wherein the engraving apparatus further comprises a control assembly, wherein the control assembly is in communication connection with the moving mechanism and the engraving assembly, and is configured to control on and off of the moving mechanism and the engraving assembly.

12. A battery processing device, comprising an engraving apparatus according to any one of claims 1 to 11, wherein the engraving apparatus is configured to engrave a surface of a battery after the battery is assembled.
